Europäisches Patentamt

European Patent Office

Office européen des brevets

(19)

(11) **EP 0 705 399 B1**

(12) **EUROPÄISCHE PATENTSCHRIFT**

(45) Veröffentlichungstag und Bekanntmachung des Hinweises auf die Patenterteilung:
**03.06.1998 Patentblatt 1998/23**

(51) Int Cl.6: **F16H 61/00**

(21) Anmeldenummer: **95913869.4**

(22) Anmeldetag: **29.03.1995**

(86) Internationale Anmeldenummer:
**PCT/DE95/00425**

(87) Internationale Veröffentlichungsnummer:
**WO 95/27159 (12.10.1995 Gazette 1995/43)**

(54) **SCHLUPFREGLER FÜR STUFENLOSES GETRIEBE**

SLIP CONTROLLER FOR CONTINUOUSLY VARIABLE TRANSMISSION

REGULATEUR DE GLISSEMENT POUR TRANSMISSION A VARIATION CONTINUE

(84) Benannte Vertragsstaaten:
**DE FR GB IT NL SE**

(30) Priorität: **02.04.1994 DE 4411628**

(43) Veröffentlichungstag der Anmeldung:
**10.04.1996 Patentblatt 1996/15**

(73) Patentinhaber: **ROBERT BOSCH GMBH**
**70442 Stuttgart (DE)**

(72) Erfinder:
• **SENGER, Karl-Heinz**
**D-74369 Löchgau (DE)**

• **LUH, Joachim**
**D-74080 Heilbronn (DE)**
• **BAEUERLE, Peter**
**D-71636 Ludwigsburg (DE)**

(56) Entgegenhaltungen:
EP-A- 0 451 887 WO-A-90/05866
WO-A-92/18791 DE-A- 4 312 745
US-A- 4 322 798 US-A- 5 182 968
US-A- 5 310 384

## Beschreibung

Stand der Technik

Die Erfindung betrifft eine Vorrichtung bzw. ein Verfahren zur Steuerung eines stufenlos in seiner Übersetzung verstellbaren Getriebes mit den Merkmalen des Oberbegriffs der jeweiligen unabhängigen Ansprüche.

Aus der WO 92/18791 ist ein kontinuierlich verstellbares Getriebe bekannt, bei dem die Regelung der Motordrehzahl durch eine Steuerung der Getriebeübersetzung, die auf dem Bandschlupf basiert, geschieht. Eine Regelung des Bandschlupfes auf einen vorgebbaren Sollwert ist hier nicht beschrieben.

Die US 4,322,798 beschreibt ein kontinuierlich in seiner Übersetzung einstellbares Reibradgetriebe, bei dem der Schlupf zwischen der An- und Abtriebsseite geregelt wird.

Die nicht vorveröffentlichte DE,A1,43 12 745 zeigt ein Kegelscheibenumschlingungsgetriebe, bei dem der Schlupf des Getriebes als Regulativ zur Anpreßkraftregelung eingesetzt wird. zur Bestimmung des Schlupfes wird die geometrische Übersetzung durch einen Wegsensor erfaßt.

Die vorliegende Erfindung betrifft ein stufenlos in seiner Übersetzung verstellbares Umschlingungsgetriebe mit einer Antriebsseite und einer Abtriebsseite, die wenigstens ein axial verschiebbares Element aufweist, das im wesentlichen die Form einer Kegelscheibe besitzt. Die Erfindung ersetzt die bisher übliche Bandspannungsregelung bei solchen Kegelscheibenumschlingungsgetrieben mit elektrohydraulischer Aktuierung.

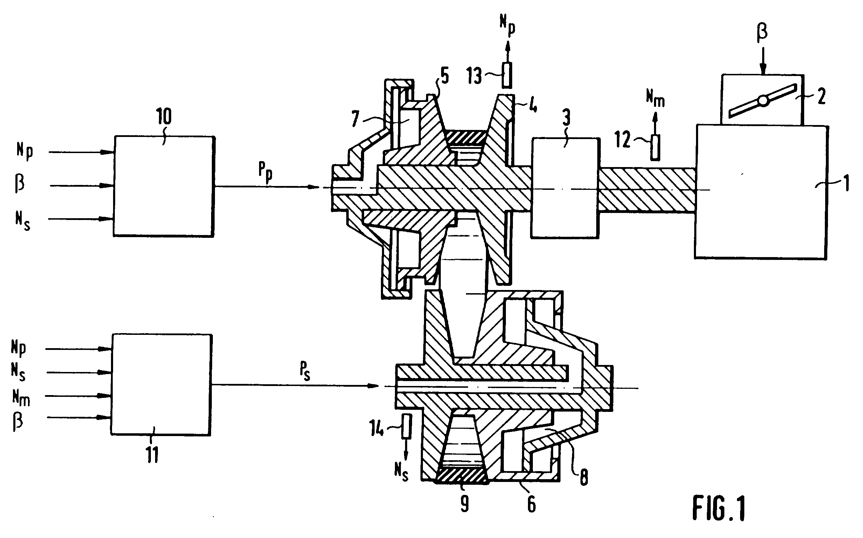

In der Figur 1 ist ein solcher Getriebeaufbau im Schnitt dargestellt. Der Verbrennungsmotor 1 kann durch die Drosselklappe 2 in seinem abgegebenen Motormoment $M_m$ beeinflußt werden. Die Drosselklappe 2 ist z.B. mechanisch oder elektrisch mit dem Fahrpedal (nicht dargestellt) gekoppelt. Der Verbrennungsmotor 1 ist meist mittels einer Kupplung und/oder einem Wandler 3 an die Antriebs- (Primär-) Seite des CVT-Getriebes 4 angekoppelt. Die Abtriebs-(Sekunder-) Seite des CVT-Getriebes 4 ist über ein nachgeschaltetes Getriebe (nicht dargestellt) mit den Rädern des Fahrzeugs verbunden. Das CVT-Getriebe besitzt auf der Primär- und Sekundärseite je eine axial verschiebbare Kegelscheibe 5 und 6. Zur Verstellung der Übersetzung wird in den Ölkammern 7 und 8 ein entsprechender Primärdruck $P_p$ bzw. Sekundärdruck $P_s$ aufgebaut. Durch eine geeignete Wahl der Stellgrößen Primärdruck $P_p$ und Sekundärdruck $P_s$ muß gewährleistet werden, daß

1. die Getriebeübersetzung i dem gewünschten Verhältnis von Primärdrehzahl $N_p$ und Sekundärdrehzahl $N_s$ entspricht, und

2. das kraftübertragende Schubgliederband 9 (bzw. Kette, Band) ausreichend stark an die Scheiben angepreßt wird, um ein Durchrutschen des Schubgliederbandes 9 zu verhindern.

Der obengenannte Punkte 1 wird durch eine elektrohydraulische Übersetzungs- oder Primärdrehzahlregelung 10 realisiert. Für den Punkt 2 wird eine Bandspannungsregelung 11 eingesetzt.

Zur Übersetzungs- und Bandspannungsregelung sind am Motor 1 und an dem CVT-Getriebe 4 Drehzahlsensoren 12, 13 und 14 vorhanden, welche die Motordrehzahl $M_m$, die Primärdrehzahl $N_p$ und die Sekundärdrehzahl $N_s$ erfassen.

In dem häufig eingesetzten und in der Figur 1 gezeichneten Master-Slave-Prinzip dient der Sekundärdruck $P_s$ zur Einstellung der Bandspannung und der Primärdruck $P_p$ zur Einstellung der Übersetzungs- bzw. Primärdrehzahl. Bei dem alternativ möglichen Partner-Prinzip beeinflußt die Bandspannungsregelung sowohl den Primär- als auch den Sekundärdruck.

Allgemein kann man davon sprechen, daß für die Bandspannungsregelung ein Stellsignal in Form einer Druckgröße $P_B$ zur Verfügung steht. Aus der Literatur sind mehrere Verfahren zur Regelung der Bandspannung bekannt, die jedoch alle in ähnlicher Form arbeiten. Im folgenden wird die gattungsgemäße EP,A1,0 451 887 zur Erläuterung herangezogen:

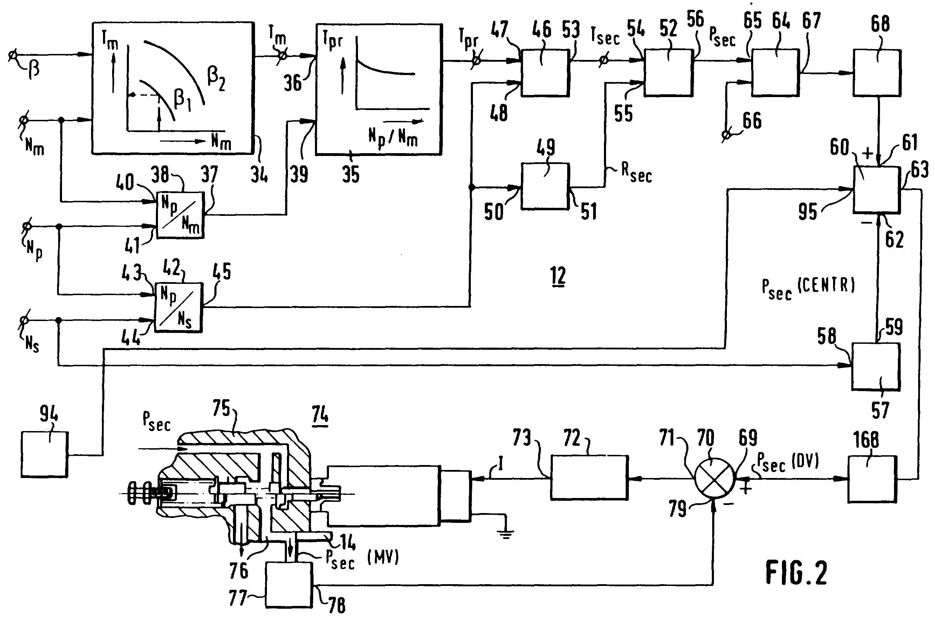

Hierzu zeigt die Figur 2 die Bandspannungsregelung, die in diesem Schutzrecht beschrieben wird. Aus dem Drosselklappenwinkel β und der Motordrehzahl $N_m$ wird mit dem Kennfeld 34 das abgegebene Motormoment $T_m$ bestimmt. Mit den Blöcken 38 und 35 kann das vom Wandler abgegebene Primärmoment $T_{pr}$ berechnet werten. Der Block 45 berechnet die Übersetzung des CVT. Mit dem Block 46 kann aus der Üsersetzung und dem Primärmoment $T_{pr}$ das Sekundärmoment $T_{sec}$ abgeschätzt werden. Mit dem Block 49 berechnet man aus der Übersetzung den Sekundärradius $R_{sec}$. Aus dem Sekundärradius und dem Sekundärmoment $T_{sec}$ folgt nun mit 52 der mindestens erforderliche sekundärdruck $P_{sec}$. Nach Aufschlag eines Reservedrucks in Block 64 wird das Signal durch einem Tiefpaß 68 geglättet. Anschließend wird der durch Fliehkräfte an der Sekundärscheibe erzeugte mittlere Durck $P_{sec}$ (CENTR) mit dem Block 60 von obigem Druck abgezogen. Zudem wird das Ergebnis des Drucks 63 durch ein Sensorsignal zur Messung der Bodenunebenheit 94 beeinflußt und anschließend durch einen Begrenzer 168 auf einen wählbaren Bereich eingeschränkt. Das Ergebnis der bisherigen Berechnungen $P_{sec}$ (TV) wird nun von einem unterlagerten Druckregelkreis 70, 72 usw. weiterverwendet. Der Druckregelkreis sorgt dafür, daß an der Sekundärscheibe letzlich der Druck $P_{sec}$ (MV) auf den Wert $P_{sec}$ (DV) eingestellt wird.

Aufgabe der vorliegenden Erfindung ist es, bei eimem an sich bekannten stufenlos verstellbaren Getriebe die bisher übliche Bandspannungsregelung zu verbessern.

Dies wird durch die Merkmale der unabhängigen Ansprüche erreicht.

Vorteile der Erfindung

Die bisher übliche Bandspannungsregelung bei einem Kegelscheiben umschlingungsgetriebe soll erfindungsgemäß durch eine Schlupfregelung ersetzt werden. Dazu wird mit Hilfe von Sensoren der Schlupf und damit das Durchrutschen des Bandes ermittelt und das Stellsignal $P_p$ so eingestellt, daß der Schlupf einen akzeptablen Wert annimmt, der einem hohen Wirkungsgrad des Getriebes entspricht.

Die Erfindung geht also aus von einem stufenlos in seiner Übersetzung verstellbaren Getriebe mit einer Antriebsseite und einer Abtriebsseite und mit Wirkmitteln zur Herstellung einer in ihrem Schlupfverhalten beeinflußbaren mechanischen Wirkverbindung zwischen der Antriebs- und Abtriebsseite. Solch ein Getriebe ist beispielsweise in der schon beschriebenen Figur 1 zu sehen. Erfindungsgemäß wird der Schlupf der Wirkverbindung auf einen vorgebbaren Sollwert geregelt. Hierzu sind entsprechende Regelmittel vorgesehen. Durch die erfindungsgemäße Regelung des Schlupfes kann also, wie erwähnt, der Schlupf auf einen akzeptablen Wert geregelt werden, der einem hohen Wirkungsgrad des Getriebes entspricht. Hierdurch ergeben sich folgende Vorteile:

1. Das Durchrutschen der Wirkmittel, im allgemeinen ein Schubgliederband oder ein Riemen oder eine Kette, wird sicher verhindert. Bei den bekannten Lösungen muß der Druck so hoch festgelegt werden, daß ein Durchrutschen sicher verhindert wird. Straßenunebenheiten, Bremsmanöver, Herunterschalten und kurzzeitige Erhöhung des zu übertragenden Moments durch dynamische Lastschwankungen können jedoch Probleme bereiten, wodurch zusätzliche Maßnahmen zur Vermeidung des Durchrutschens notwendig werden.

2. Das Getriebe arbeitet mit einem höheren Wirkungsgrad.

3. Das mittlere Druckniveau und somit die hydraulischen Verluste werden verringert.

4. Die Anforderungen an die Genauigkeit der unterlagerten Druckregelung sind geringer.

Wie schon anhand des Standes der Technik beschrieben, weist das Umschlingungsgetriebe eine Antriebsseite und/oder Abtriebsseite mit wenigstens einem axial verschiebbaren Element auf, das im wesentlichen die Form einer Kegelscheibe besitzt. Darüber hinaus kann als Wirkmittel wenigstens ein Band, vorzugsweise ein schubgliederband, oder ein Riemen oder eine Kette zwischen den Scheibenpaaren, die die Antriebs- und die Abtriebsseite darstellen, eingespannt sein, wobei der Schlupf zwischen den Wirkmitteln und den die Wirkmittel einspannenden Scheibenpaaren regelbar ist.

Besonders vorteilhaft ist es, daß die Regelung bzw. die Regelmittel derart ausgestaltet sind, daß zur Regelung des Schlupfes der aktuelle Schlupf mit einem vorgebbaren Sollwert verglichen wird.

Zur Schlupfregelung werden erfindungsgemäß zwei Varianten vorgestellt. Die Variante 1 benötigt einen zusätzlichen Sensor, während die Variante 2 eine Abwandlung des bisher eingesetzten Drehzahlsensors an der Primär- und/oder Sekundärseite beinhaltet.

Für beide Varianten ist es vorteilhaft, daß erste und zweite Drehzahlerfassungsmittel zur Erfassung der Kegelschneiben der Antriebs- und/oder Abtriebsseite vorgesehen sind, und daß die Ausgangssignale dieser Sensormittel den Regelmitteln zugeführt werden.

Bei der Variante 1 sind dritte Geschwindigkeitserfassungsmittel zur Erfassung der Geschwindigkeit der zwischen den Scheibenpaaren eingespannten Wirkmittel vorgesehen. Insbesondere werden bei dieser Variante zur Ermittlung des aktuellen Schlupfes die Ausgangssignale der ersten, zweiten und dritten Erfassungsmittel ausgewertet.

Zur Variante 2 ist die Erfassung der axialen Verschiebung wenigstens eines der axial verschiebbaren Elemente vorgesehen. Insbesondere ist bei dieser Variante das Erfassungsmittel derart ausgestaltet, daß jeweils für die Drehzahlerfassung und die Verschiebungserfassung das Ausgangssignal eines einzigen Sensors ausgewertet wird.

Eine vorteilhafte Ausgestaltung der zweiten Variante besteht darin, daß mit dem Drehzahlsensor gleichzeitig der axiale Versatz der beweglichen Kegelscheiben gemessen werden kann und aus dem axialen Versatz auf die normale Übersetzung des CVT bei Schlupf Null geschlossen werden kann.

Besonders vorteilhaft ist es, daß die axialbewegliche Scheibe, deren axiale Verschiebung und Drehzahl mittels des relativ zu dieser Scheibe raumfest angeordneten Sensors gemessen wird, einen durch den Sensor abtastbaren auf dem Umfang der Scheibe verlaufenden Bereich aufweist. Dieser Bereich besitzt eine durch den Sensor abtastbare Struktur, welche derart beschaffen ist, daß eine axiale Verschiebung der Scheibe durch eine signifikante Änderung des Sensorsignals repräsentiert wird.

Insbesondere kann vorgesehen sein, daß zur Messung der Drehung und axialen Verschiebung der axialbeweglichen Scheibe der durch den Sensor abtastbare und auf den Umfang der Scheibe verlaufende Bereich eine signifikante Oberflächenstruktur im Form eines Dreiecks-, Sägezahn- oder ähnliches Muster aufweist.

Der Vorteil der Variante 2 mit einem einzigen Sensor zur Erfassung der Drehzahl und des axialen Verschiebung besteht darin, daß zur erfindungsgemäßen Schlupfregelung kein zusätzlicher Sensor benötigt wird.

Vorteilhafterweise wird die erfindungsgemäße Schlupfregelung erst oberhalb einer minimalen Drehzahl, vorzugsweise der Primärdrehzahl, aktiviert.

Weitere vorteilhafte Ausgestaltungen der Erfindung sind den Unteransprüchen und den im folgenden beschriebenen Ausführungsbeispielen zu entnehmen.

Zeichnung

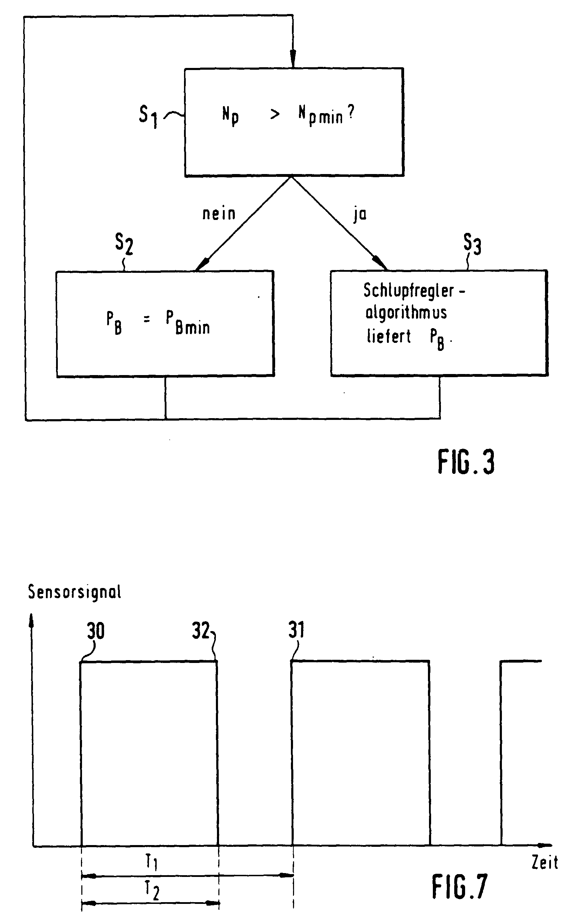

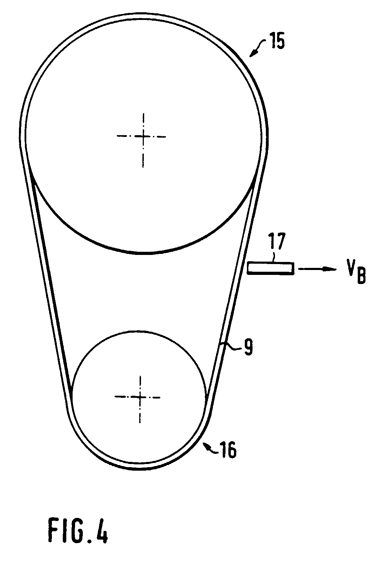

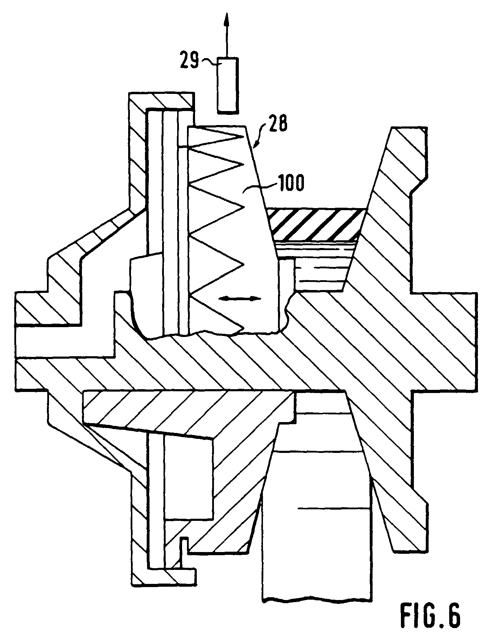

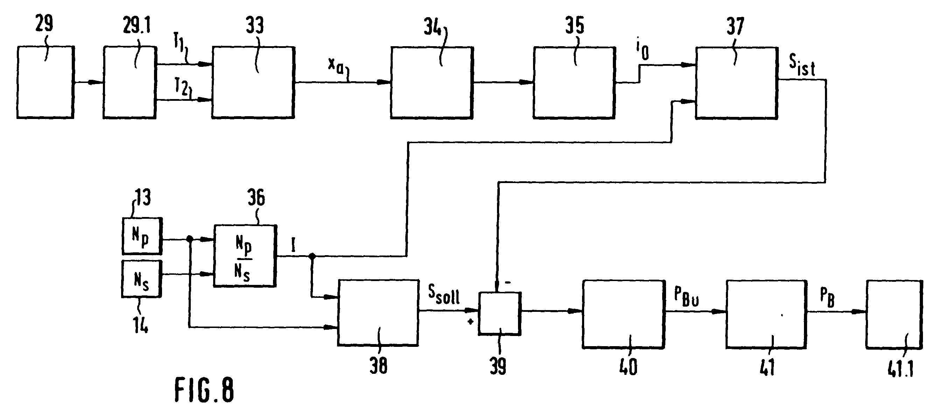

In der Figur 3 wird ein Ablaufdiagramm des Schlupfreglers nach den Varianten 1 und 2 gezeigt. In der Figur 4 wird die Anordnung des Bandgeschwindigkeitssensors für den Schlupfregler nach Variante 1 erläutert. Ein Blockschaltbild des Schlupfreglers der Variante 1 ist in der Figur dargestellt. In den Figuren 6 bis 8 wird ein Ausführungsbeispiel des Schlupfreglers nach Variante 2 gezeigt. Hierzu wird die spezielle Ausführung der Drehzahlsensoren der Variante 2 in der Figur 6 dargestellt, wobei die Figur 7 ein Impulsdiagramm des kombinierten Drehzahl- und Übersetzungssensors zeigt. Die Figur 8 beinhaltet das Blockschaltbild des Schlupfreglers nach Variante 2.

Ausführungsbeispiel

Die Erfindung soll im folgenden anhand der Ausführungsbeispiele detailliert beschrieben werden.

Der in der Figur 3 gezeigte Steueralgorithmus des Schlupfreglers prüft ständig, ob der Absolutwert der Primärdrehzahl $N_p$ größer ist als eine minimale Primärdrehzahl $N_{pmin}$ (Konstante) (Schritt S1). Wenn das nicht der Fall ist, wird im Schritt S2 das Stellsignal $P_B$ (beim Master-Slave-Prinzip gleich dem Sekundärdruck $P_s$) auf einen festen Wert $P_{Bmin}$ (Konstante) gesetzt. Anderenfalls wird im Schritt S3 der Algorithmus des Schlupfreglers nach Figur 5 bzw. 8 abgearbeitet und das Stellsignal auf den dort ermittelten Wert gesetzt. Die Weiterverarbeitung des Stellsignals erfolgt durch eine unterlagerte Druckregelung, wie sie beispielsweise in der schon erwähnten EP,A1,0 451 887 beschrieben ist.

In der Figur 4 wird die erfindungsgemäße Anordnung nach der Variante 1 gezeigt. Zwischen der Primärscheibe 15 und der Sekundärscheibe 16 wird ein induktiver oder Hall-Geschwindigkeitssensor 17 angeordnet, mit dem die Geschwindigkeit $V_B$ des Schubgliederbandes 9 gemessen wird. Durch die Wahl eines geeigneten Anbauortes wird gewährleistet, daß bei allen wählbaren Übersetzungen des Getriebes der Abstand zwischen dem Sensor und dem Band so klein ist, daß ein hinreichend gutes Sensorsignal vorhanden ist.

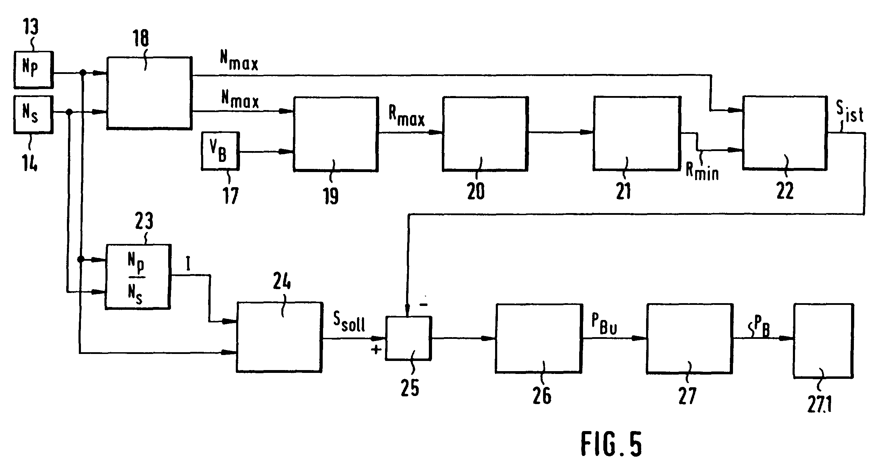

In dem Block 18 der Figur 5 wird von den zwei Signalen Primärdrehzahl $N_p$ und Sekundärdrehzahl $N_s$ die betragsmäßig größte Drehzahl $N_{max}$ und die betragsmäßig kleinste Drehzahl $N_{min}$ ermittelt. Aus der betragsmäßig kleinsten Drehzahl $N_{min}$ und der Bandgeschwindigkeit $V_B$ wird im Block 19 der Radius $R_{max}$ berechnet:

$$R_{max} = \left| V_B/N_{min} \right| * (30/2\pi)$$

Dieses Signal wird durch einen Tiefpaß 20 geglättet. Mittels des Kennfeldblocks 21 wird anschließend der Radius $R_{min}$ berechnet. Mit der Gleichung

$$S_{ist} = 1 - \left| N_{max} * (R_{min}/V_B) \right| * (\pi/30)$$

wird in Block 22 der Istschlupf $S_{ist}$ berechnet. Mit dem Block 23 wird die Übersetzung I berechnet:

$$I = N_p/N_s.$$

Unter Verwendung der Primärdrehzahl $N_p$ und der Übersetzung I wird im Block 24 der Sollschlupf aus einem Kennfeld ermittelt. Die Summationsstelle 25 bildet die Differenz zwischen Soll- und Istschlupf. Der PID-Regler 26 erzeugt das Stellsignal $P_{Bu}$. Dieses wird durch den Begrenzer 27 auf minimale und maximale Werte limitiert. Das gewonnene Signal ist das Stellsignal $P_B$, das dem unterlagerten Druckregler 27.1 (siehe Figur 2) zugeführt wird.

In der Figur 6 wird die Variante 2 des Schlupfreglers gezeigt. Diese Variante verwendet zur Messung der Primär- und/oder Sekundärdrehzahl einen oder mehrere abgewandelte Drehzahlsensoren, die gleichzeitig als Übersetzungssensoren benutzt werden. Eine mögliche konstruktive Ausführung ist in der Figur 6 am Beispiel der Primärscheibe dargestellt.

Die axialbewegliche Scheibe 28 wird z.B. durch Fräsen auf dem äußeren Umfang derart modifiziert, daß ein Dreiecks-, Sägezahn oder ähnliches Muster 100 entsteht, welches bei Drehung der Scheibe in dem induktiven Sensor 29 ein Signal derart erzeugt, daß sowohl eine Drehzahlinformation, als auch eine Information über die axiale Position der beweglichen Scheibe aus diesem Signal ablesbar ist. Das durch den Sensor 29 abtastbare Muster 100 kann selbstverständlich auch durch unterschiedliche durch den Sensor 29 abtastbare Materialeigenschaften in diesem Bereich erreicht werden. Beispielsweise soll in diesem Zusammenhang auf unterschiedliche magnetische Eigenschaften hingewiesen werden.

Die Figur 7 zeigt nun ein Impulsdiagramm, wie es beispielsweise bei Drehung der Scheibe durch den induktiven Sensor 29 nach Figur 6 erzeugt werden kann. Der zeitliche Abstand $T_1$ zwischen den beiden Flanken 30 und 31 kann in ein Drehzahlsignal $N_p$ bzw. $N_s$ umgerechnet werden (diese Umrechnung ist aus der Literatur hinlänglich bekannt). Setzt man den Abstand $T_2$ der Flanken 30 und 32 ins Verhältnis zum Abstand $T_1$ der Flanken 30 und 31, so kann daraus der axiale Versatz der beweglichen Kegelscheibe 28 berechnet werden.

In der Figur 8 ist zu sehen, daß das Ausgangssignal des Sensors 29 im Block 29.1, wie anhand der Fig.7 beschrieben wurde, ausgewertet wird. Mit dem Block 33 wird aus den Signalen $T_1$ und $T_2$ der axiale Versatz der Kegelscheibe $X_a$ berechnet (wie anhand der Figur 7 beschrieben) und durch den Tiefpaß 34 geglättet. Der Kennfeldblock 35 bestimmt daraus die Übersetzung $i_0$. Diese Übersetzung würde das Getriebe aufweisen, wenn der Schlupf Null wäre. Der Block 36 ermittelt die Übersetzung I aus der Primärdrehzahl $N_p$ und der Sekundärdrehzahl $N_s$. Der Block 37 berechnet nach der Formel

$$S_{ist} = 1 - (I_0/I)$$

den Istschlupf $S_{ist}$. Der Sollschlupf wird mit einem Kennfeld in den Block 38 in Abhängigkeit von der Übersetzung I und der Primärdrehzahl $N_p$ festgelegt. Die Summationsstelle 39 bildet die Differenz zwischen Soll- und Istschlupf. Diese Differenz wird von einem PID-Regler 40 in ein Stellsignal $P_{Bu}$ umgerechnet. Die anschließende Begrenzung auf minimale und maximale Werte durch den Block 41 liefert das Signal $P_B$, das, wie anhand der Fig.2 beschrieben ist, dem unterlagerten Druckregler 41.1 zugeführt wird.

Zusammenfassend ist zur vorliegenden Erfindung folgendes zu sagen:

Für ein elektro-hydraulisch betätigbares stufenloses Umschlingungsgetriebe muß der Anpreßdruck an den beweglichen Kegelscheiben so groß gewählt werden, daß die Kette, das Schubgliederband oder ähnliches nicht durchrutscht. Andererseits soll der Anpreßdruck nicht zu hoch sein, um einen hohen Wirkungsgrad des Getriebes in jedem Betriebspunkt zu erzielen. Die Erfindung verhindert sicher das Durchrutschen des Bandes (Kette, Schubgliederband oder ähnliches) durch Regelung des Bandschlupfes. Dadurch wird der mittlere Anpreßdruck reduziert. Somit sinken die mechanischen und hydraulischen Verluste am Getriebe. Eine Variante der Erfindung enthält eine Ausführung eines Drehzahlsensors mit dem gleichzeitig auch die axiale Position der Scheibe(n) gemessen werden kann. Infolgedessen verringert sich der zusätzliche Aufwand, der für eine Schlupfregelung im Vergleich zur Bandspannungsregelung erforderlich ist.

**Patentansprüche**

**Patentansprüche für folgenden Vertragsstaat : DE**

1. Vorrichtung zur Steuerung eines stufenlos in seiner Übersetzung verstellbaren Umschlingungsgetriebes mit einer Antriebsseite und einer Abtriebsseite, die wenigstens ein axial verschiebbares Element (5, 6) aufweisen, das im wesentlichen die Form einer Kegelscheibe besitzt und mit Wirkmitteln (9) zur Herstellung einer in ihrem Schlupfverhalten beeinflussbaren mechanischen Wirkverbindung zwischen der Antriebs- und Abtriebsseite, gekennzeichnet mit

- Verschiebungserfassungsmitteln (29) zur Erfassung der axialen Verschiebung wenigstens eines der axial verschiebbaren Elemente (5, 6), wobei die Erfassungsmittel derart ausgestaltet sind, daß jeweils für die Drehzahlerfassung und die Verschiebungserfassung das Ausgangssignal eines einzigen Sensors (29) ausgewertet wird und
- Regelmitteln (18-25, 33-39), mittels der der Schlupf der Wirkmittel (9) abhängig von der erfaßten Verschiebung auf einen vorgebbaren Sollwert geregelt wird.

2. Vorrichtung zur Steuerung eines stufenlos in seiner Übersetzung verstellbaren Umschlingungsgetriebes mit einer Antriebsseite und einer Abtriebsseite, die wenigstens ein axial verschiebbares Element (5, 6) aufweisen, das im wesentlichen die Form einer Kegelscheibe besitzt und mit Wirkmitteln (9) zur Herstellung einer in ihrem Schlupfverhalten beeinflussbaren mechanischen Wirkverbindung zwischen der Antriebs- und Abtriebsseite, gekennzeichnet mit

- ersten und zweiten Drehzahlerfassungsmitteln (13, 14) zur Erfassung der Drehzahl der Kegelscheiben (5, 6) der Antriebs- und/oder Abtriebsseite,
- dritten Geschwindigkeitserfassungsmitteln (17) zur Erfassung der Geschwindigkeit ($V_B$) der zwischen den Scheibenpaaren eingespannten Wirkmittel (9) und
- Regelmitteln (18-25, 33-39), mittels der der Schlupf der Wirkmittel (9) abhängig von den erfaßten Drehzahlen und abhängig von der erfaßten Geschwindigkeit ($V_B$) der Wirkmittel (9) auf einen vorgebbaren Sollwert geregelt wird.

3. Vorrichtung nach Anspruch 1 oder 2, dadurch gekennzeichnet, daß als Wirkmittel (9) wenigstens ein Band, vorzugsweise ein Schubgliederband, oder ein Riemen oder eine Kette zwischen Scheibenpaaren, die die Antriebs- und die Abtriebsseite darstellen, eingespannt ist, wobei der Schlupf zwischen dem Wirkmittel und den die Wirkmittel einspannenden Scheibenpaaren regelbar ist.

4. Vorrichtung nach einem der vorhergehenden Ansprüche, dadurch gekennzeichnet, daß die Regelmittel (18-25, 33-39) derart ausgestaltet sind, daß zur Regelung des Schlupfes der aktuelle Schlupf ($S_{ist}$) mit einem vorgebbaren Sollwert ($S_{soll}$) verglichen wird.

5. Vorrichtung nach Anspruch 1, dadurch gekennzeichnet, daß erste und zweite Drehzahlerfassungsmittel (13, 14) zur Erfassung der Drehzahl der Kegelscheiben (5, 6) der Antriebs- und/oder Abtriebsseite vorgesehen sind und die Ausgangssignale ($N_p$, $N_s$) dieser Sensormittel den Regelmitteln (18-25, 33-39) zugeführt werden.

6. Vorrichtung nach Anspruch 2 und 4, dadurch gekennzeichnet, daß die Regelmittel (18-25) derart ausgestaltet sind, daß zur Ermittlung des aktuellen Schlupfes ($S_{ist}$) die Ausgangssignale der ersten, zweiten und dritten Erfassungsmittel (13, 14, 17) ausgewertet werden.

7. Vorrichtung nach Anspruch 1, dadurch gekennzeichnet, daß die axial bewegliche Scheibe (28), deren axiale Verschiebung und Drehzahl mittels des relativ zu dieser Scheibe raumfest angeordneten Sensors (29) gemessen wird, einen durch den Sensor (29) abtastbaren auf dem Umfang der Scheibe verlaufenden Bereich (100) aufweist, der eine durch den Sensor abtastbare in Struktur besitzt, welche derart beschaffen ist, daß eine axiale Verschiebung der Scheibe durch eine signifikante Änderung des Sensorsignals repräsentiert wird.

8. Vorrichtung nach Anspruch 7, dadurch gekennzeichnet, daß die axial bewegliche Scheibe (28), deren Verschiebung und Drehzahl mittels des relativ zu dieser Scheibe raumfest angeordneten Sensors (29) gemessen wird, in dem durch den Sensor abtastbaren auf dem Umfang der Scheibe verlaufenden Bereich (100) eine signifikante Oberflächenstruktur in Form eines Dreiecks-, Sägezahn- oder ähnliches Muster aufweist.

9. Vorrichtung nach einem der vorangehenden Ansprüche, dadurch gekennzeichnet, daß die Regelmittel (18-25, 33-39) derart ausgestaltet sind, daß die Schlupfregelung erst oberhalb einer minimalen Drehzahl ($N_{pmin}$), vorzugsweise der Primärdrehzahl, aktiviert wird.

10. Verfahren zur Steuerung eines stufenlos in seiner Übersetzung verstellbaren Umschlingungsgetriebes mit einer Antriebsseite und einer Abtriebsseite, die wenigstens ein axial verschiebbares Element (5, 6) aufweisen, das im wesentlichen die Form einer Kegelscheibe besitzt und mit Wirkmitteln (9) zur Herstellung einer in ihrem Schlupfverhalten beeinflussbaren mechanischen Wirkverbindung zwischen der Antriebs- und Abtriebsseite, dadurch gekennzeichnet, daß

 - die axiale Verschiebung wenigstens eines der axial verschiebbaren Elemente (5, 6) aufgrund der Auswertung eines Ausgangssignals eines einzigen Sensors (29) erfaßt wird und
 - der Schlupf der Wirkmittel (9) abhängig von der erfaßten Verschiebung auf einen vorgebbaren Sollwert geregelt wird.

11. Verfahren zur Steuerung eines stufenlos in seiner Übersetzung verstellbaren Umschlingungsgetriebes mit einer Antriebsseite und einer Abtriebsseite, die wenigstens ein axial verschiebbares Element (5, 6) aufweisen, das im wesentlichen die Form einer Kegelscheibe besitzt und mit Wirkmitteln (9) zur Herstellung einer in ihrem Schlupfverhalten beeinflussbaren mechanischen Wirkverbindung zwischen der Antriebs- und Abtriebsseite, dadurch gekennzeichnet, daß

 - die Drehzahl der Kegelscheiben (5, 6) der Antriebs- und/oder Abtriebsseite erfaßt werden,
 - die Geschwindigkeit ($V_B$) der zwischen den Scheibenpaaren eingespannten Wirkmittel (9) erfaßt wird und
 - der Schlupf der Wirkmittel (9) abhängig von den erfaßten Drehzahlen und abhängig von der erfaßten Geschwindigkeit ($V_B$) der Wirkmittel (9) auf einen vorgebbaren Sollwert geregelt wird.

12. Verfahren nach Anspruch 10 oder 11, dadurch gekennzeichnet, daß die Schlupfregelung erst oberhalb einer minimalen Drehzahl ($N_{pmin}$), vorzugsweise der primärdrehzahl, aktiviert wird.

**Patentansprüche für folgende Vertragsstaaten : FR, GB, IT, NL, SE**

1. Vorrichtung zur Steuerung eines stufenlos in seiner Übersetzung verstellbaren Umschlingungsgetriebes mit einer Antriebsseite und einer Abtriebsseite, die wenigstens ein axial verschiebbares Element (5, 6) aufweisen, das im wesentlichen die Form einer Kegelscheibe besitzt und mit Wirkmitteln (9) zur Herstellung einer in ihrem Schlupfverhalten beeinflussbaren mechanischen Wirkverbindung zwischen der Antriebs- und Abtriebsseite, gekennzeichnet mit

 - Verschiebungserfassungsmitteln (29) zur Erfassung der axialen Verschiebung wenigstens eines der axial verschiebbaren Elemente (5, 6) und
 - Regelmitteln (18-25, 33-39), mittels der der Schlupf der Wirkmittel (9) abhängig von der erfaßten Verschiebung auf einen vorgebbaren Sollwert geregelt wird.

2. Vorrichtung zur Steuerung eines stufenlos in seiner Übersetzung verstellbaren Umschlingungsgetriebes mit einer Antriebsseite und einer Abtriebsseite, die wenigstens ein axial verschiebbares Element (5, 6) aufweisen, das im wesentlichen die Form einer Kegelscheibe besitzt und mit Wirkmitteln (9) zur Herstellung einer in ihrem Schlupfverhalten beeinflussbaren mechanischen Wirkverbindung zwischen der Antriebs- und Abtriebsseite, gekennzeichnet mit

- ersten und zweiten Drehzahlerfassungsmitteln (13, 14) zur Erfassung der Drehzahl der Kegelscheiben (5, 6) der Antriebsund/oder Abtriebsseite,
- dritten Geschwindigkeitserfassungsmitteln (17) zur Erfassung der Geschwindigkeit ($V_B$) der zwischen den Scheibenpaaren eingespannten Wirkmittel (9) und
- Regelmitteln (18-25, 33-39), mittels der der Schlupf der Wirkmittel (9) abhängig von den erfaßten Drehzahlen und abhängig von der erfaßten Geschwindigkeit ($V_B$) der Wirkmittel (9) auf einen vorgebbaren Sollwert geregelt wird.

3. Vorrichtung nach Anspruch 1 oder 2, dadurch gekennzeichnet, daß als Wirkmittel (9) wenigstens ein Band, vorzugsweise ein Schubgliederband, oder ein Riemen oder eine Kette zwischen Scheibenpaaren, die die Antriebs- und die Abtriebsseite darstellen, eingespannt ist, wobei der Schlupf zwischen dem Wirkmittel und den die Wirkmittel einspannenden Scheibenpaaren regelbar ist.

4. Vorrichtung nach einem der vorhergehenden Ansprüche, dadurch gekennzeichnet, daß die Regelmittel (18-25, 33-39) derart ausgestaltet sind, daß zur Regelung des Schlupfes der aktuelle Schlupf ($S_{ist}$) mit einem vorgebbaren Sollwert ($S_{soll}$) verglichen wird.

5. Vorrichtung nach Anspruch 1, dadurch gekennzeichnet, daß erste und zweite Drehzahlerfassungsmittel (13, 14) zur Erfassung der Drehzahl der Kegelscheiben (5, 6) der Antriebs- und/oder Abtriebsseite vorgesehen sind und die Ausgangssignale ($N_p$, $N_s$) dieser Sensormittel den Regelmitteln (18-25, 33-39) zugeführt werden.

6. Vorrichtung nach Anspruch 2 und 4, dadurch gekennzeichnet, daß die Regelmittel (18-25) derart ausgestaltet sind, daß zur Ermittlung des aktuellen Schlupfes ($S_{ist}$) die Ausgangssignale der ersten, zweiten und dritten Erfassungsmittel (13, 14, 17) ausgewertet werden.

7. Vorrichtung nach Anspruch 1, dadurch gekennzeichnet, daß die Erfassungsmittel derart ausgestaltet sind, daß jeweils für die Drehzahlerfassung und die Verschiebungserfassung das Ausgangssignal eines einzigen Sensors (29) ausgewertet wird.

8. Vorrichtung nach Anspruch 7, dadurch gekennzeichnet, daß die axial bewegliche Scheibe (28), deren axiale Verschiebung und Drehzahl mittels des relativ zu dieser Scheibe raumfest angeordneten Sensors (29) gemessen wird, einen durch den Sensor (29) abtastbaren auf dem Umfang der Scheibe verlaufenden Bereich (100) aufweist, der eine durch den Sensor abtastbare in Struktur besitzt, welche derart beschaffen ist, daß eine axiale Verschiebung der Scheibe durch eine signifikante Änderung des Sensorsignals repräsentiert wird.

9. Vorrichtung nach Anspruch 8, dadurch gekennzeichnet, daß die axial bewegliche Scheibe (28), deren Verschiebung und Drehzahl mittels des relativ zu dieser Scheibe raumfest angeordneten Sensors (29) gemessen wird, in dem durch den Sensor abtastbaren auf dem Umfang der Scheibe verlaufenden Bereich (100) eine signifikante Oberflächenstruktur in Form eines Dreiecks-, Sägezahn- oder ähnliches Muster aufweist.

10. Vorrichtung nach einem der vorangehenden Ansprüche, dadurch gekennzeichnet, daß die Regelmittel (18-25, 33-39) derart ausgestaltet sind, daß die Schlupfregelung erst oberhalb einer minimalen Drehzahl ($N_{pmin}$), vorzugsweise der Primärdrehzahl, aktiviert wird.

11. Verfahren zur Steuerung eines stufenlos in seiner Übersetzung verstellbaren Umschlingungsgetriebes mit einer Antriebsseite und einer Abtriebsseite, die wenigstens ein axial verschiebbares Element (5, 6) aufweisen, das im wesentlichen die Form einer Kegelscheibe besitzt und mit Wirkmitteln (9) zur Herstellung einer in ihrem Schlupfverhalten beeinflussbaren mechanischen Wirkverbindung zwischen der Antriebs- und Abtriebsseite, dadurch gekennzeichnet, daß

- die axiale Verschiebung wenigstens eines der axial verschiebbaren Elemente (5, 6) erfaßt wird und
- der Schlupf der Wirkmittel (9) abhängig von der erfaßten Verschiebung auf einen vorgebbaren Sollwert geregelt wird.

12. Verfahren zur Steuerung eines stufenlos in seiner Übersetzung verstellbaren Umschlingungsgetriebes mit einer Antriebsseite und einer Abtriebsseite, die wenigstens ein axial verschiebbares Element (5, 6) aufweisen, das im wesentlichen die Form einer Kegelscheibe besitzt und mit Wirkmitteln (9) zur Herstellung einer in ihrem Schlupfverhalten beeinflussbaren mechanischen Wirkverbindung zwischen der Antriebs- und Abtriebsseite, dadurch gekennzeichnet, daß

- die Drehzahl der Kegelscheiben (5, 6) der Antriebs- und/oder Abtriebsseite erfaßt werden,
- die Geschwindigkeit ($V_B$) der zwischen den Scheibenpaaren eingespannten Wirkmittel (9) erfaßt wird und

- der Schlupf der Wirkmittel (9) abhängig von den erfaßten Drehzahlen und abhängig von der erfaßten Geschwindigkeit ($V_B$) der Wirkmittel (9) auf einen vorgebbaren Sollwert geregelt wird.

13. Verfahren nach Anspruch 11 oder 12, dadurch gekennzeichnet, daß die Schlupfregelung erst oberhalb einer minimalen Drehzahl ($N_{pmin}$), vorzugsweise der Primärdrehzahl, aktiviert wird.

## Claims

### Claims for the following Contracting State : DE

1. Device for controlling a wrap-around transmission with a continuously variable transmission ratio, having a driving side and a driven side which have at least one axially displaceable element (5, 6), which essentially has the shape of a cone pulley, and having effecting means (9) for the purpose of establishing a mechanical effective connection with an influenceable slip behaviour between the driving side and the driven side, characterized by

   - displacement detection means (29) to detect the axial displacement of at least one of the axially displaceable elements (5,6), the detection means being configured in such a way that the output signal of a single sensor (29) is evaluated both for rotational-speed detection and displacement detection,
   - control means (18-25, 33-39), by means of which the slip of the effecting means (9) is adjusted to a specifiable desired value as a function of the detected displacement.

2. Device for controlling a wrap-around transmission with a continuously variable transmission ratio, having a driving side and a driven side which have at least one axially displaceable element (5, 6), which essentially has the shape of a cone pulley, and having effecting means (9) for the purpose of establishing a mechanical effective connection with an influenceable slip behaviour between the driving side and the driven side, characterized by

   - first and second rotational-speed detection means (13,14) for detecting the rotational speed of the cone pulleys (5,6) of the driving and/or driven side,
   - third speed detection means (17) for detecting the speed ($V_B$) of the effecting means (9) held between the pairs of pulleys and
   - control means (18-25, 33-39), by means of which the slip of the effecting means (9) is adjusted to a specifiable desired value as a function of the detected rotational speeds and as a function of the detected speed ($V_B$) of the effecting means (9).

3. Device according to Claim 1 or 2, characterized in that at least one belt, preferably a thrust-element belt, or a band or a chain is held between pairs of pulleys which represent the driving and the driven side, the slip between the effecting means and the pairs of pulleys holding the effecting means being controllable.

4. Device according to one of the preceding claims, characterized in that the control means (18-25, 33-39) are configured in such a way that, to control the slip, the current slip ($S_{act}$) is compared with a specifiable desired value ($S_{des}$).

5. Device according to Claim 1, characterized in that first and second rotational-speed detection means (13, 14) for detecting the rotational speed of the cone pulleys (5, 6) of the driving and/or driven side are provided and the output signals ($N_p$, $N_s$) of these sensor means are fed to the control means (18-25, 33-39).

6. Device according to Claim 2 and 4, characterized in that the control means (18-25) are configured in such a way that, to determine the current slip ($S_{act}$), the output signals of the first, second and third detection means (13, 14, 17) are evaluated.

7. Device according to Claim 1, characterized in that the axially movable pulley (28), the axial displacement and rotational speed of which are measured by means of the sensor (29) arranged in a spatially fixed manner relative to this pulley, has an area (100) which can be sensed by the sensor (29), extends on the circumference of the pulley and has a structure which can be sensed by the sensor and which is such that an axial displacement of the pulley is represented by a significant change in the sensor signal.

8. Device according to Claim 7, characterized in that the axially movable pulley (28), the displacement and the rotational speed of which is measured by means of the sensor (29) arranged in a spatially fixed manner relative to this pulley, has a significant surface structure in the form of a triangular, sawtooth or similar pattern in the area (100) that can be sensed by the sensor and extends on the circumference of the pulley.

9. Device according to one of the preceding claims, characterized in that the control means (18-25, 33-39) are configured in such a way that slip control is activated only above a minimum rotational speed ($N_{pmin}$), preferably the primary rotational speed.

10. Method for controlling a wrap-around transmission with a continuously variable transmission ratio, having a driving side and a driven side which have at least one axially displaceable element (5, 6), which essentially has the shape of a cone pulley, and having effecting means (9) for the purpose of establishing a mechanical effective connection with an influenceable slip behaviour between the driving side and the driven side, characterized in that

- the axial displacement of at least one of the axially displaceable elements (5,6) is detected owing to the evaluation of an output signal of a single sensor (29) and
- the slip of the effecting means (9) is adjusted to a specifiable desired value as a function of the detected displacement.

11. Method for controlling a wrap-around transmission with a continuously variable transmission ratio, having a driving side and a driven side which have at least one axially displaceable element (5, 6), which essentially has the shape of a cone pulley, and having effecting means (9) for the purpose of establishing a mechanical effective connection with an influenceable slip behaviour between the driving side and the driven side, characterized in that

- the rotational speed of the cone pulleys (5,6) of the driving and/or driven side are detected,
- the speed ($V_B$) of the effecting means (9) held between the pairs of pulleys is detected and
- the slip of the effecting means (9) is adjusted to a specifiable desired value as a function of the detected rotational speeds and as a function of the detected speed ($V_B$) of the effecting means (9).

12. Method according to Claim 10 or 11, characterized in that slip control is activated only above a minimum rotational speed ($N_{pmin}$), preferably the primary rotational speed.

**Claims for the following Contracting States : FR, GB, IT, NL, SE**

1. Device for controlling a wrap-around transmission with a continuously variable transmission ratio, having a driving side and a driven side which have at least one axially displaceable element (5, 6), which essentially has the shape of a cone pulley, and having effecting means (9) for the purpose of establishing a mechanical effective connection with an influenceable slip behaviour between the driving side and the driven side, characterized by

- displacement detection means (29) to detect the axial displacement of at least one of the axially displaceable elements (5,6) and
- control means (18-25, 33-39), by means of which the slip of the effecting means (9) is adjusted to a specifiable desired value as a function of the detected displacement.

2. Device for controlling a wrap-around transmission with a continuously variable transmission ratio, having a driving side and a driven side which have at least one axially displaceable element (5, 6), which essentially has the shape of a cone pulley, and having effecting means (9) for the purpose of establishing a mechanical effective connection with an influenceable slip behaviour between the driving side and the driven side, characterized by

- first and second rotational-speed detection means (13,14) for detecting the rotational speed of the cone pulleys (5,6) of the driving and/or driven side,
- third speed detection means (17) for detecting the speed ($V_B$) of the effecting means (9) held between the pairs of pulleys and
- control means (18-25, 33-39), by means of which the slip of the effecting means (9) is adjusted to a specifiable desired value as a function of the detected rotational speeds and as a function of the detected speed ($V_B$) of the effecting means (9).

3. Device according to Claim 1 or 2, characterized in that at least one belt, preferably a thrust-element belt, or a band or a chain is held between pairs of pulleys which represent the driving and the driven side, the slip between the effecting means and the pairs of pulleys holding the effecting means being controllable.

4. Device according to one of the preceding claims, characterized in that the control means (18-25, 33-39) are configured in such a way that, to control the slip, the current slip ($S_{act}$) is compared with a specifiable desired value ($S_{des}$).

5. Device according to Claim 1, characterized in that first and second rotational-speed detection means (13, 14) for detecting the rotational speed of the cone pulleys (5, 6) of the driving and/or driven side are provided and the output signals ($N_p$, $N_s$) of these sensor means are fed to the control means (18-25, 33-39).

6. Device according to Claim 2 and 4, characterized in that the control means (18-25) are configured in such a way that, to determine the current slip ($S_{act}$), the output signals of the first, second and third detection means (13, 14, 17) are evaluated.

7. Device according to Claim 1, characterized in that the detection means are configured in such a way that the output signal of a single sensor (29) is evaluated both for rotational-speed detection and displacement detection.

8. Device according to Claim 7, characterized in that the axially movable pulley (28), the axial displacement and rotational speed of which are measured by means of the sensor (29) arranged in a spatially fixed manner relative to this pulley, has an area (100) which can be sensed by the sensor (29), extends on the circumference of the pulley and has a structure which can be sensed by the sensor and which is such that an axial displacement of the pulley is represented by a significant change in the sensor signal.

9. Device according to Claim 8, characterized in that the axially movable pulley (28), the displacement and the rotational speed of which is measured by means of the sensor (29) arranged in a spatially fixed manner relative to this pulley, has a significant surface structure in the form of a triangular, sawtooth or similar pattern in the area (100) that can be sensed by the sensor and extends on the circumference of the pulley.

10. Device according to one of the preceding claims, characterized in that the control means (18-25, 33-39) are configured in such a way that slip control is activated only above a minimum rotational speed ($N_{pmin}$), preferably the primary rotational speed.

11. Method for controlling a wrap-around transmission with a continuously variable transmission ratio, having a driving side and a driven side which have at least one axially displaceable element (5, 6), which essentially has the shape of a cone pulley, and having effecting means (9) for the purpose of establishing a mechanical effective connection with an influenceable slip behaviour between the driving side and the driven side, characterized in that

- the axial displacement of at least one of the axially displaceable elements (5,6) is detected and
- the slip of the effecting means (9) is adjusted to a specifiable desired value as a function of the detected displacement.

12. Method for controlling a wrap-around transmission with a continuously variable transmission ratio, having a driving side and a driven side which have at least one axially displaceable element (5, 6), which essentially has the shape of a cone pulley, and having effecting means (9) for the purpose of establishing a mechanical effective connection with an influenceable slip behaviour between the driving side and the driven side, characterized in that

- the rotational speed of the cone pulleys (5,6) of the driving and/or driven side are detected,
- the speed ($V_B$) of the effecting means (9) held between the pairs of pulleys is detected and
- the slip of the effecting means (9) is adjusted to a specifiable desired value as a function of the detected rotational speeds and as a function of the detected speed ($V_B$) of the effecting means (9).

13. Method according to Claim 11 or 12, characterized in that slip control is activated only above a minimum rotational speed ($N_{pmin}$), preferably the primary rotational speed.

## Revendications

### Revendications pour l'Etat contractant suivant : DE

1. Dispositif servant à commander une boîte de vitesse à contact et enroulement dont on peut régler de façon continue la démultiplication, avec un côté d'entraînement et un côté entraîné qui présentent au moins un élément qui peut se déplacer axialement (5, 6), qui possède sensiblement la forme d'un disque conique et avec des moyens opérationnels (9) servant à établir une liaison opérationnelle entre le côté de l'entraînement et le côté entraîné, liaison opérationnelle mécanique, qui peut être influencée quant à son mode de glissement,
caractérisé par

- des moyens de détection d'un déplacement (29), qui servent à détecter le déplacement axial d'au moins un élément (5, 6) pouvant se déplacer axialement,
- des moyens de détection sont constitués d'une façon telle que l'on exploite respectivement pour la détection de la vitesse de rotation et la détection de déplacement le signal de sortie d'un unique détecteur (29),
- des moyens de réglage (18 à 25, 33 à 39), au moyen desquels on règle le glissement des moyens opérationnels (9), en fonction du déplacement détecté, sur une valeur de consigne qui peut être définie au préalable.

2. Dispositif servant à commander une boîte de vitesse à contact et enroulement dont on peut régler de façon continue la démultiplication, avec un côté d'entraînement et un côté entraîné qui présentent au moins un élément (5, 6),qui peut se déplacer axialement, qui possède sensiblement la forme d'un disque conique et avec des moyens opérationnels (9) servant à établir une liaison opérationnelle entre le côté de l'entraînement et le côté entraîné, liaison opérationnelle mécanique, qui peut être influencée quant à son mode de glissement, caractérisé par

- un premier et un second moyen de détection de la vitesse de rotation (13, 14), qui servent à détecter la vitesse de rotation des disques coniques (5, 6) du côté de l'entraînement et du côté entraîné,
- un troisième moyen de détection de la vitesse de rotation (17) qui sert à détecter la vitesse ($V_B$) des moyens opérationnels (9) tendus entre les paires de disques et
- des moyens de réglage (18 à 25, 33 à 39), au moyen desquels on règle le glissement des moyens opérationnels (9) en fonction des vitesses de rotation détectées et en fonction de la vitesse ($V_B$) détectée des moyens opérationnels (9) sur une valeur de consigne qui peut être définie au préalable.

3. Dispositif selon la revendication 1 ou 2, caractérisé en ce que l'on tend comme moyen opérationnel (9) au moins une bande, de préférence une bande à organes de glissement ou une courroie ou une chaîne, entre des paires de disques, qui constituent le côté de l'entraînement et le côté entraîné, le glissement entre le moyen opérationnel et les paires de disques, devant tendre le moyen opérationnel, pouvant être réglé.

4. Dispositif selon l'une des revendications précédentes, caractérisé en ce que les moyens de réglage (18 à 25, 33 à 39) sont constitués d'une manière telle que, pour régler le glissement, on compare le glissement actuel ($S_{réel}$) à une valeur de consigne ($S_{cons}$) qui peut être définie au préalable.

5. Dispositif selon la revendication 1, caractérisé en ce qu'

- on prévoit un premier et un second moyen de détection de la vitesse de rotation (13, 14) qui servent à détecter la vitesse de rotation des disques coniques (5, 6) du côté de l'entraînement et du côté entraîné et
- on amène les signaux de sortie ($N_p$, $N_s$) de ces moyens de détection aux moyens de réglage (18 à 25, 33 à 39).

6. Dispositif selon la revendication 2 et la revendication 4, caractérisé en ce que les moyens de réglage (18 à 25) sont constitués d'une manière telle que, pour déterminer le glissement actuel ($S_{réel}$), on exploite les signaux de sortie du premier, du deuxième et du troisième moyen de détection (13, 14, 17).

7. Dispositif selon la revendication 1, caractérisé en ce que le disque (28), mobile axialement, dont on mesure le déplacement et la vitesse de rotation au moyen du détecteur (29), qui est disposé de façon fixe dans l'espace par rapport à ce disque, présente une zone (100), qui s'étend sur le pourtour du disque, et qui peut être palpée par le détecteur (29), zone qui possède une structure, qui peut être palpée par le détecteur, qui est réalisée d'une manière telle qu'un déplacement axial du disque soit représenté par une variation significative du signal du détecteur.

8. Dispositif selon la revendication 7, caractérisé en ce que le disque (28), mobile axialement, dont on mesure le coulissement et la vitesse de rotation au moyen du détecteur (29), qui est disposé de façon fixe dans l'espace par rapport à ce disque, présente dans la zone (100) qui s'étend sur le pourtour du disque qui peut être palpée par le détecteur, une structure superficielle significative se présentant sous la forme d'un modèle en triangle, en dent de scie ou analogue.

9. Dispositif selon l'une des revendications précédentes, caractérisé en ce que les moyens de réglage (18 à 25, 33 à 39) sont constitués d'une manière telle que la régulation antipatinage n'est activée seulement qu'au dessus d'une vitesse de rotation minimale ($N_{pmin}$), de préférence la vitesse de rotation primaire.

10. Procédé servant à commander une boîte de vitesse à contact et enroulement dont on peut régler de façon continue la démultiplication, avec un côté d'entraînement et un côté entraîné qui présentent au moins un élément qui peut se déplacer axialement (5, 6) qui possède sensiblement la forme d'un disque conique et avec des moyens opérationnels (9) servant à établir une liaison opérationnelle entre le côté de l'entraînement et le côté entraîné, liaison opérationnelle mécanique, qui peut être influencée quant à son mode de glissement, caractérisé en ce que

- le déplacement axial d'au moins l'un des éléments (5, 6) qui peuvent se déplacer axialement, est détecté sur la base de l'exploitation d'un signal de sortie d'un unique détecteur (29),
- le glissement des moyens opérationnels (9) est réglé, en fonction du déplacement détecté, sur une valeur de consigne, qui peut être définie au préalable.

11. Procédé servant à commander une boîte de vitesse à contact et enroulement dont on peut régler de façon continue la démultiplication, avec un côté d'entraînement et un côté entraîné qui présentent au moins un élément qui peut se déplacer axialement (5, 6), qui possède sensiblement la forme d'un disque conique et avec des moyens opérationnels (9) servant à établir une liaison opérationnelle entre le côté de l'entraînement et le côté entraîné, liaison opérationnelle mécanique, qui peut être influencée quant à son mode de glissement,
caractérisé en ce que

- l'on détecte la vitesse de rotation des disques coniques (5, 6) du côté de l'entraînement et du côté entraîné,
- l'on détecte la vitesse ($V_B$) des moyens opérationnels (9), qui sont tendus entre les paires de disques et
- l'on règle le glissement des moyens opérationnels (9),en fonction des vitesses de rotation détectées et en fonction de la vitesse détecté ($V_B$) des moyens opérationnels (9), sur une valeur de consigne, qui peut être définie au préalable.

12. Procédé selon la revendication 10 ou la revendication 11,
caractérisé en ce que
la régulation antipatinage n'est activée qu'au dessus d'une vitesse de rotation minimale ($N_{pmin}$), de préférence de la vitesse de rotation primaire.

**Revendications pour les Etats contractants suivants : FR, GB, IT, NL, SE**

1. Dispositif servant à commander une boîte de vitesse à contact et enroulement dont on peut régler de façon continue la démultiplication, avec un côté d'entraînement et un côté entraîné, qui présentent au moins un élément qui peut coulisser axialement (5, 6), qui possède sensiblement la forme d'un disque conique et avec des moyens opérationnels (9) servant à établir une liaison opérationnelle entre le côté de l'entraînement et le côté entraîné, liaison opérationnelle mécanique, qui peut être influencée quant à son mode de glissement,
caractérisé par

- des moyens de détection d'un déplacement (29), qui servent à détecter le déplacement axial d'au moins un élément (5, 6) pouvant se déplacer axialement, et
- des moyens de réglage (18 à 25, 33 à 39), au moyen desquels on règle le déplacement des moyens opérationnels (9), en fonction du déplacement détecté, sur une valeur de consigne qui peut être définie au préalable.

2. Dispositif servant à commander une boîte de vitesse à contact et enroulement dont on peut régler de façon continue la démultiplication, avec un côté d'entraînement et un côté entraîné, qui présentent au moins un élément (5, 6),qui peut coulisser axialement, qui possède sensiblement la forme d'un disque conique et avec des moyens opérationnels (9) servant à établir une liaison opérationnelle entre le côté de l'entraînement et le côté entraîné, liaison opérationnelle mécanique, qui peut être influencée quant à son mode de glissement,
caractérisé par

- un premier et un second moyen de détection de la vitesse de rotation (13, 14), qui servent à détecter la vitesse de rotation des disques coniques (5, 6) du côté de l'entraînement et du côté entraîné.
- un troisième moyen de détection de la vitesse de rotation (17) qui sert à détecter la vitesse ($V_B$) des moyens opérationnels (9) tendus entre les paires de disques et
- des moyens de réglage (18 à 25, 33 à 39), au moyen desquels on règle le glissement des moyens opérationnels (9) en fonction des vitesses de rotation détectées et en fonction de la vitesse ($V_B$) détectée des moyens opérationnels (9) sur une valeur de consigne qui peut être définie au préalable.

3. Dispositif selon la revendication 1 ou 2,
caractérisé en ce que
l'on tend comme moyen opérationnel (9) au moins une bande, de préférence une bande à organes de glissement ou une courroie ou une chaîne, entre des paires de disques, qui constituent le côté de l'entraînement et le côté entraîné, le glissement entre le moyen opérationnel et les paires de disques, devant tendre le moyen opérationnel, pouvant être réglé.

4. Dispositif selon l'une des revendications précédentes,
caractérisé en ce que
les moyens de réglage (18 à 25, 33 à 39) sont constitués d'une manière telle que, pour régler le glissement, on compare le glissement actuel ($S_{réel}$) à une valeur de consigne ($S_{cons}$), qui peut être définie au préalable.

5. Dispositif selon la revendication 1,
caractérisé en ce qu'

- on prévoit un premier et un second moyen de détection de la vitesse de rotation (13, 14), qui servent à détecter la vitesse de rotation des disques coniques (5, 6) du côté de l'entraînement et du côté entraîné et
- on amène les signaux de sortie ($N_p$, $N_s$) de ces moyens de détection aux moyens de réglage (18 à 25, 33 à 39).

6. Dispositif selon la revendication 2 et la revendication 4,
caractérisé en ce que
les moyens de réglage (18 à 25) sont constitués d'une manière telle que, pour déterminer le glissement actuel ($S_{réel}$), on exploite les signaux de sortie du premier, du deuxième et du troisième moyen de détection (13, 14, 17).

7. Dispositif selon la revendication 1,
caractérisé en ce que
les moyens de détection sont constitués d'une manière telle que l'on exploite respectivement pour la détection de la vitesse de rotation et pour la détection du déplacement le signal de sortie d'un détecteur unique (29).

8. Dispositif selon la revendication 7,
caractérisé en ce que
le disque (28) mobile axialement, dont on mesure le déplacement axial et la vitesse de rotation au moyen du détecteur (29) qui est disposé de façon fixe dans l'espace par rapport à ce disque, présente une zone (100), qui s'étend sur le pourtour du disque de façon à pouvoir être palpée par le détecteur (29), zone (100) qui possède une structure pouvant être palpée par le détecteur, et qui est réalisée d'une manière telle qu'un déplacement axial du disque est représenté par une modification significative du signal du détecteur.

9. Dispositif selon la revendication 8,
caractérisé en ce que
le disque (28), mobile axialement, dont on mesure le déplacement et la vitesse de rotation au moyen du détecteur (29), qui est disposé de façon fixe dans l'espace par rapport à ce disque, présente dans la zone (100), qui s'étend sur le pourtour du disque, qui peut être palpée par le détecteur, une structure superficielle significative se présentant sous la forme d'un modèle en triangle en dent de scie ou analogue.

10. Dispositif selon l'une des revendications précédentes,
caractérisé en ce que
les moyens de réglage (18 à 25, 33 à 39) sont constitués d'une manière telle que la régulation antipatinage n'est activée seulement qu'au dessus d'une vitesse de rotation minimale ($N_{pmin}$), de préférence la vitesse de rotation primaire.

11. Procédé servant à commander une boîte de vitesse à contact et enroulement dont on peut régler de façon continue la démultiplication, avec un côté d'entraînement et un côté entraîné, qui présentent au moins un élément qui peut se déplacer axialement (5, 6), qui possède sensiblement la forme d'un disque conique et avec des moyens opérationnels (9) servant à établir une liaison opérationnelle entre le côté de l'entraînement et le côté entraîné, liaison opérationnelle mécanique, qui peut être influencée quant à son mode de glissement,
caractérisé en ce que

- le déplacement axial d'au moins l'un des éléments (5, 6), qui peuvent se déplacer axialement est détecté et
- le glissement des moyens opérationnels (9) est réglé, en fonction du déplacement détecté, sur une valeur de consigne qui peut être définie au préalable.

12. Procédé servant à commander une boîte de vitesse à contact et enroulement dont on peut régler de façon continue la démultiplication, avec un côté d'entraînement et un côté entraîné qui présentent au moins un élément qui peut se déplacer axialement (5, 6), qui possède sensiblement la forme d'un disque conique et avec des moyens opérationnels (9) servant à établir une liaison opérationnelle entre le côté de l'entraînement et le côté entraîné, liaison opérationnelle mécanique, qui peut être influencée quant à son mode de glissement,
caractérisé en ce qu'

- on détecte la vitesse de rotation des disques coniques (5, 6) du côté de l'entraînement et du côté entraîné,
- on détecte la vitesse ($V_B$) des moyens opérationnels (9), qui sont tendus entre les paires de disques, et
- on règle le glissement des moyens opérationnels (9), en fonction des vitesses de rotation détectées et en fonction de la vitesse détecté ($V_B$) des moyens opérationnels (9), sur une valeur de consigne, qui peut être définie au préalable.

13. Procédé selon la revendication 11 ou la revendication 12,
caractérisé en ce que

la régulation antipatinage n'est activée qu'au dessus d'une vitesse de rotation minimale ($N_{pmin}$), de préférence de la vitesse de rotation primaire.

FIG.1

FIG.2

$S_1$    $N_p \quad > \quad N_{pmin}$ ?

nein        ja

$S_2$

$P_B \quad = \quad P_{Bmin}$

$S_3$

Schlupfregler -
algorithmus
liefert   $P_B$ .

**FIG.3**

Sensorsignal

30       32       31

$T_1$

$T_2$

Zeit

**FIG.7**

FIG.4

EP 0 705 399 B1

FIG.5

FIG.6

FIG.8